# EUROPEAN PATENT SPECIFICATION

(11) **EP 2 646 205 B1**
(45) Date of publication and mention of the grant of the patent: **01.02.2017**
(21) Application number: 11844424.9
(22) Date of filing: 01.12.2011
(51) Int. Cl.: B25J 9/00, B25J 9/02, B25J 13/00

(54) **METHOD AND SYSTEM FOR HANDLING OBJECTS**
VERFAHREN UND SYSTEM ZUR HANDHABUNG VON OBJEKTEN
PROCÉDÉ ET SYSTÈME POUR MANIPULER DES OBJETS

(30) Priority: 02.12.2010 NO 20101689
(43) Date of publication of application: 09.10.2013
(73) Proprietor: Sapa AS, 0185 Oslo (NO)
(72) Inventor: LINDHEIM, Tomas, NO-1369 Stabekk (NO); LIEDTKE, Ralf, NO-28259 Bremen (DE)
(74) Representative: Zacco Sweden AB
(86) International application number: PCT/NO2011/000336
(87) International publication number: WO 2012/074410

(56) References cited:
- EP-A2- 2 060 367
- WO-A1-2005/009691
- WO-A1-2005/009691
- JP-A- 2002 336 994
- JP-A- 2002 336 994

## Description

The present invention relates to a method and a system for handling objects. In particular the invention relates to handling and packing long, light weighted objects.

WO 2005009691 discloses a system for handling heavy objects, where two crane based manipulators handle an object. Each manipulator has one arm with gripping means at their outermost ends, whereby the gripping means hold the object at its extremities during handling. The robot system includes a rail supported above a floor and at least two robot arms supported on the rail for mutual relative displacement and coordinated displacement along the rail. Under control of a controller the robot arms grip, raise, carry, lower, and release various workpieces along a path defined by the rail. Each robot arm may also handle an individual workpiece without cooperation of the other robot arm.

JP 2002 336994 A relates to a transport apparatus for a material to be transported and welding equipment which carry out the transportation positioning of a long-sized member quickly and accurately and which is automatically operated to temporary attachment welding. The apparatus is represented by a gantry type arrangement having two robots.

The present invention consists mainly of two floor arranged manipulators or robots of the pedestal type, where at least one of them is arranged for linear movement towards the other, to compensate for handling objects of variable lengths.

In relation to aluminium extrusion facilities there is a certain need for handling and packing extruded profiles. Such profiles can have rather slim cross-sections while their lengths can commonly be up to approximately 7 metres and in some cases even more. The internal handling operations related to stacking, packing before shipping, or other operations, are commonly done manually. Thus, due to the size and properties of the objects, two operators are needed to handle them. Normally, the operators grip one end of the object each, and due to sagging in the vertical plane or bending in the horizontal plane of the object they have to avoid the object touching the base or other physical attributes to avoid scratching of the objects surface.

Often profiles with surface finish are packed into boxes of wood, plastics or the similar, with protecting spacers between them sideways and also between the layers of profiles. Such spacers can be represented by strips of cartoon, corrugated paper or the similar.

In accordance with the invention it is now possible to replace monotonous manual handling of long, tiny object by an automatic packing facility, and at the same time reduce the risk of damages at the surface of the object during the handling operation.

This and further advantages can be achieved with the invention in accordance to the accompanying claims.

In the following, the invention shall be described by example and figures where:
- Fig. 1: discloses a packing facility, seen in perspective from above,
- Fig. 2: discloses a gripper designed for the purpose of profile handling and packing and spacer handling,
- Fig. 3: discloses an alternative embodiment of the outer section of one robot, including a gripper.

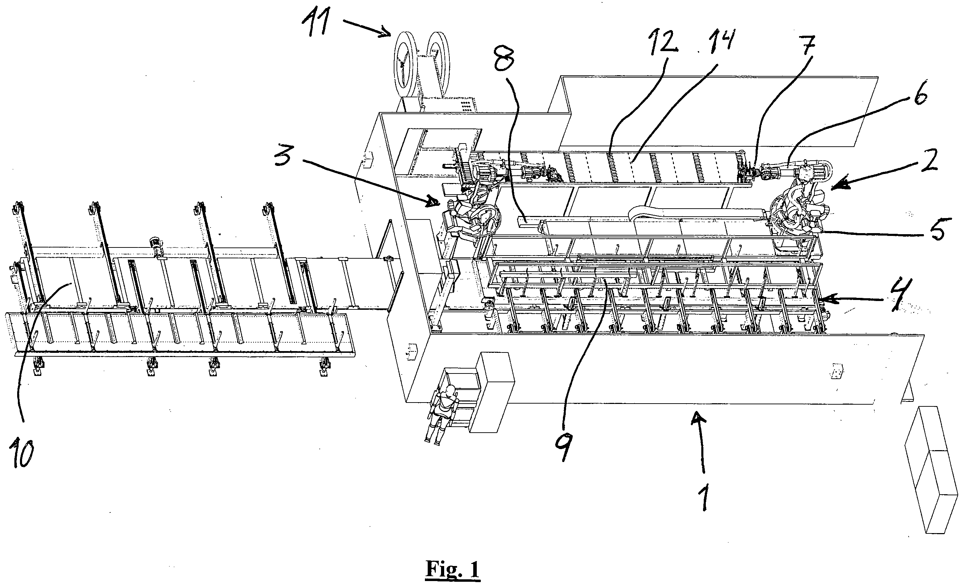

Fig. 1 discloses a packing facility 1 where two robots 2, 3 are arranged to handle profiles entering a table 4 from an extrusion press (not shown). The robots shown are of pedestal type having a base 5, one arm 6 and gripper 7 (see robot 2). In this embodiment the robot 2 is further arranged for linear movement along a track 8, to compensate for objects of varying length.

The movements of the two robots are coordinated and controlled by a control unit (not shown). The arms of the robots are articulated about multiple axes to engage and handle the object. The control unit controls articulation and displacement of the robot arms.

Preferably the robots are of a 6 axis industrial robot type, where at least one could be arranged for linear movement along a track.

Further, the control unit communicates with a recognition unit that determines what type of object that has to be handled by the robots. Object specific parameters such as cross-section configuration, thickness etc. can be determined by this unit. The recognition unit can comprise at least one camera that images the end of the object, whereby the image is processed to decide crucial cross-section information. It should be understood that any other convenient vision system may be applied.

The control unit will process this information and, if necessary a change of gripper will be done before the object is handled. The change can be done in an automated manner while the robots are commanded to approach a tooling station with appropriate grippers. Such change of tooling and the arrangement thereof, is in general commonly known to those skilled in the art and will not be further described here.

The objects will be picked up and lifted by the coordinated movements of the robots. The problems with sagging of the objects have been solved by the robots being controlled in a way where the distance between the grippers are constant during handling. Therefore, the objects will be very little prone to sagging.

The robots are controlled in such a way that a set tension is applied between the grippers, to stretch the profile at some extent. Such tension can be applied immediately after the grippers engage the object, i.e. before it is lifted up from its storing position, or it can be applied during the lifting/handling operation. The grippers are held at a constant distance after application of this tension.

The object picked up from table 4 by the robots is in this embodiment moved to a stacking unit, a shipping box or the similar (not shown) arranged on conveyer 9. As one unit is ready for shipment, it leaves the facility at conveyer 10.

At position 11 there is disclosed a spacer preparation unit. This unit provides spacers for the packing operation and communicates with conveyor 14 where spacers 12 are evenly distributed for being picked up by the robots and put in place during the packing operation. Both flat spacers and flat spacers with vertical walls can be handled by this arrangement.

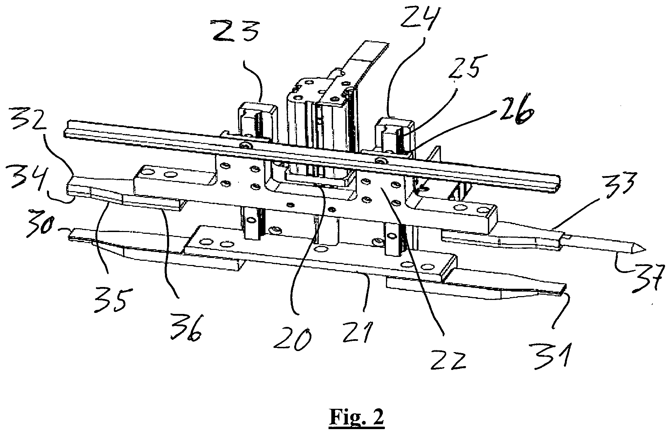

In Fig. 2 there is disclosed a gripper arrangement that has been designed as a part of the invention. An actuator 20 is arranged to move one first base 21 relatively one second base 22. The bases are linearly movable by means of a set of linear bearings 23, 24 each consisting of an inner guide element 25 and an outer guide element 26.

The first base 21 has two grippers 30, 31 attached to it. Similarly, the second base 22 also have two grippers 32, 33 attached to it. The grippers 30, 32 and the grippers 31, 33 are mutually applied to grip the end of the object. One advantage with this gripper design is that it can be arranged at the robot arm in a manner where it can be rotated to use either the first set of grippers or the second one. In particular this is useful when the robots handle profiles and spacers in alternating operations.

Preferably the grippers (see gripper 32) have a slight wedge shape with regard to their side flanks 35 from their base part 36 towards their tip section 34. Preferably, their gripping faces are planar and may have a coating, a layer or the similar that secures a good friction contact with the object. This gripper design is in particular advantageous for handling objects such as extruded profiles.

The gripper 33 has one projecting part 37 that is pin shaped and provided with a converging end. The pin is arranged there for calibrating purposes.

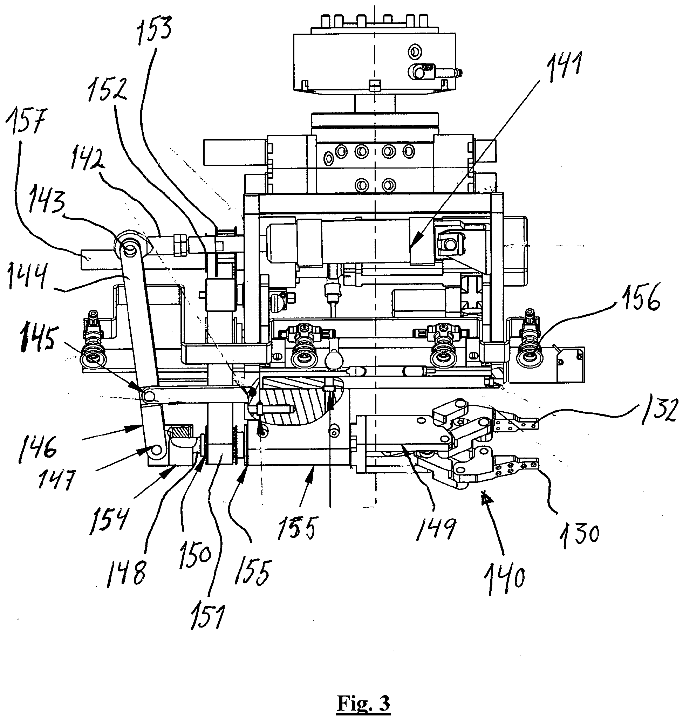

Fig. 3 discloses an alternative embodiment of the outer section of one robot, where two grippers 130, 132 can be operated as follows:
The grippers can be moved towards each other by means of a linkage system 140, attached to a bracket 149, by the activation of a rod 148. The rod is moved by a lever 146, 144, which is attached to it via pivot 147. The lever is hinged at a pivot 145 and is at its opposite end connected with a piston rod 142 of an actuator 141 via pivot 143.

When activating the actuator 141, causing the rod 148 to move, the linkage system 140 will be moved relatively to the bracket 149, and the grippers 132, 130 will be moved towards or away from each other, depending upon the direction of movement of the rod 148.

Further, the gripper arrangement is provided with means for non-limited rotation. The bracket 149 is arranged for rotation with respect to the pivot 147. For instance it can be fixed to a sleeve 155 coaxial to the rod 148, where the sleeve at its other end is driven by means of a step motor 152. The motor engages the sleeve via a transmission belt 151 and toothed wheels 153,150. Bearings are arranged at pos. 154 and 155.

The outer section of the robot further has at least one vacuum operated gripper, see pos. 156. These grippers are arranged in a movable frame, and can be moved by an actuator, and can be used for handling spacing material in a packing process.

In this embodiment, it also has grippers designed for handling flat spacers, partly shown in the figure at pos. 157. These type of grippers normally comprise two 90° angled bars that operates in pair and are lowered onto the actual flat spacer to be gripped with a horizontal part of the bar laying onto the upper surface of the spacer and a vertical part of it at the side edge thereof.

It should be understood that the system can be provided with means for determining the type of object and that the movements of the robots can be controlled by a programmable control unit (not shown). Such means can be automatic vision based scanning means.

It should be understood that the system can handle a wide range of objects and various profile shapes, and the packing method is qualified for both horizontal and vertical separation of the objects.

The robots can be of a commercially available type with preferably 6 axis, modified in accordance to the present invention.

In operation, the object is gripped at its ends by means of two synchronous robots with one arm each, said arm having a pair of grippers, whereby the two pair of grippers are maintained at constant mutual distance in the handling operation, to counteract misalignment of the object. Preferably, a tension is set up between the two pair of grippers during handling.

A synchronised rotation of the objects ends along one axis following the length direction of the object can be performed by the two pair of grippers during handling. Preferably, the object is rotated in this manner so that its centre of gravity is in vertical alignment with the two pairs of grippers.

Preferably, a rotation about a horizontal axis, perpendicular to the length axis of the object at each of the object's ends can be performed during handling, the rotation being in opposite directions, to counteract sagging of the object.

## Claims

1. Method for handling long objects that are prone to sagging, in particular packing of extruded profiles, wherein the object is gripped at its ends by means of two synchronous robots with one arm each, said arm having a pair of grippers, wherein the two pairs of grippers are maintained at constant mutual distance during handling, and wherein a tension is set up between the two pairs of grippers during handling to counteract misalignment due to sagging of the object.

2. Method in accordance to claim 1,
**characterised in that**
a synchronized rotation of the objects ends along one axis following the length direction of the object is performed by the two pair of grippers during handling.

3. Method in accordance to claim 2,
**characterised in that**
the object is rotated so that its centre of gravity is in vertical alignment with the two pairs of grippers.

4. Method in accordance to claim 1-3,
**characterised in that**
a rotation about a horizontal axis perpendicular to the length axis of the object is performed at each of the objects ends during handling, both rotations being in opposite directions.

5. System for handling long objects that are prone to sagging, in particular packing extruded profiles, comprising two robots with one arm each, said arm having a pair of grippers, and a control unit that coordinates and controls the movement of the robots, wherein the control unit is adapted for the two pairs of grippers being maintained at constant mutual distance during handling and for a tension between the two pairs of grippers being set up during handling counteract misalignment due to sagging of the object.

6. System in accordance to claim 5,
**characterised in that**
a rotation in opposite directions about a horizontal axis perpendicular to the length axis of the object of the pair of grippers is controlled by the programmable unit.

7. System in accordance to claim 5,
**characterised in that**
at least one arm has vacuum operated grippers.

8. System in accordance to claim 5,
**characterised in that**
at least one arm has grippers designed for handling flat spacers.

9. System in accordance to claim 5,
**characterised in that**
it has means for determining the type of object to be handled.

10. System in accordance to claim 5,
**characterised in that**
the robots are of a six axis industrial robot type.

11. System in accordance to claim 5,
**characterised in that**
at least one robot is arranged for linear movement.

## Patentansprüche

1. Verfahren zur Handhabung von langen Objekten, die zum Durchhängen neigen, insbesondere zum Verpacken von Strangpressprofilen, wobei das Objekt an seinen Enden mithilfe zweier synchroner Roboter mit jeweils einem Arm gegriffen wird, wobei der Arm über ein Greiferpaar verfügt, wobei die beiden Greiferpaare während der Handhabung in einem konstanten Abstand zueinander gehalten werden und wobei zwischen den beiden Greiferpaaren während der Handhabung eine Spannung aufgebaut wird, um einer Fehlausrichtung aufgrund des Durchhängens des Objekts entgegenzuwirken.

2. Verfahren nach Anspruch 1, **dadurch gekennzeichnet, dass** von den beiden Greiferpaaren während der Handhabung eine synchronisierte Drehbewegung der Objektenden entlang einer Achse durchgeführt wird, die der Längsrichtung des Objekts folgt.

3. Verfahren nach Anspruch 2, **dadurch gekennzeichnet, dass** das Objekt derart gedreht wird, dass sein Schwerpunkt vertikal zu den beiden Greiferpaaren ausgerichtet ist.

4. Verfahren nach Anspruch 1 bis 3, **dadurch gekennzeichnet, dass** an jedem der Objektenden während der Handhabung eine Drehbewegung um eine horizontale Achse, die senkrecht zur Längsachse des Objekts steht, durchgeführt wird, wobei die beiden Drehbewegungen in entgegengesetzter Richtung erfolgen.

5. System zur Handhabung von langen Objekten, die zum Durchhängen neigen, insbesondere zum Verpacken von Strangpressprofilen, umfassend zwei Roboter mit jeweils einem Arm, wobei der Arm über ein Greiferpaar verfügt, und eine Steuerungseinheit, die die Bewegung der Roboter koordiniert und steuert, wobei die Steuerungseinheit so ausgelegt ist, dass sie die beiden Greiferpaare während der Handhabung in einem konstanten Abstand zueinander hält und zwischen den beiden Greiferpaaren während der Handhabung eine Spannung aufbaut, um einer Fehlausrichtung des Objekts entgegenzuwirken.

6. System nach Anspruch 5, **dadurch gekennzeichnet, dass** die Drehbewegung des Greiferpaars in entgegengesetzte Richtungen um eine horizontale Achse, die senkrecht zur Längsachse des Objekts steht, von der programmierbaren Einheit gesteuert wird.

7. System nach Anspruch 5, **dadurch gekennzeichnet, dass** mindestens ein Arm über vakuumbetriebene Greifer verfügt.

8. System nach Anspruch 5, **dadurch gekennzeichnet, dass** mindestens ein Arm über Greifer verfügt, die für die Handhabung von flachen Abstandsstücken ausgelegt sind.

9. System nach Anspruch 5, **dadurch gekennzeichnet, dass** es über Mittel zur Bestimmung der Art des zu handhabenden Objekts verfügt.

10. System nach Anspruch 5, **dadurch gekennzeichnet, dass** die Roboter von einem Sechsachs-Industrieroboter-Typ sind.

11. System nach Anspruch 5, **dadurch gekennzeichnet, dass** mindestens ein Roboter für lineare Bewegungen ausgelegt ist.

## Revendications

1. Procédé de manipulation d'objets longs qui ont tendance à fléchir, en particulier d'emballage de profils extrudés, dans lequel l'objet est saisi au niveau de ses extrémités au moyen de deux robots synchrones dotés d'un bras chacun, ledit bras comportant une paire d'organes de préhension, dans lequel les deux paires d'organes de préhension sont maintenues à une distance réciproque constante pendant la manipulation et dans lequel une tension est établie entre les deux paires d'organes de préhension pendant la manipulation pour contrecarrer un mauvais alignement du fait du fléchissement de l'objet.

2. Procédé selon la revendication 1, **caractérisé en ce qu'**une rotation synchronisée des extrémités d'objets le long d'un axe suivant la direction en longueur de l'objet est effectuée par les deux paires d'organes de préhension pendant la manipulation.

3. Procédé selon la revendication 2, **caractérisé en ce que** l'objet est tourné de sorte que son centre de gravité soit en alignement vertical avec les deux paires d'organes de préhension.

4. Procédé selon la revendication 1 à 3, **caractérisé en ce qu'**une rotation autour d'un axe horizontal perpendiculaire à l'axe de longueur de l'objet est effectuée au niveau de chacune des extrémités d'objets pendant la manipulation, l'une et l'autre des rotations étant dans des directions opposées.

5. Système de manipulation d'objets longs qui ont tendance à fléchir, en particulier d'emballage de profils extrudés, comprenant deux robots dotés d'un bras chacun, ledit bras comportant une paire d'organes de préhension et une unité de commande qui coordonne et commande le mouvement des robots, dans lequel l'unité de commande est conçue pour que les deux paires d'organes de préhension soient maintenues à une distance réciproque constante pendant la manipulation et pour qu'une tension entre les deux paires d'organes de préhension soit établie pendant la manipulation pour contrecarrer un mauvais alignement du fait du fléchissement de l'objet.

6. Système selon la revendication 5, **caractérisé en ce qu'**une rotation dans des directions opposées autour d'un axe horizontal perpendiculaire à l'axe de longueur de l'objet de la paire d'organes de préhension est commandée par l'unité programmable.

7. Système selon la revendication 5, **caractérisé en ce qu'**au moins un bras comporte des organes de préhension à vide.

8. Système selon la revendication 5, **caractérisé en ce qu'**au moins un bras comporte des organes de préhension conçus pour manipuler des éléments d'écartement plats.

9. Système selon la revendication 5, **caractérisé en ce qu'**il comporte un moyen de détermination du type d'objet destiné à être manipulé

10. Système selon la revendication 5, **caractérisé en ce que** les robots sont d'un type de robot industriel à six axes.

11. Système selon la revendication 5, **caractérisé en ce qu'**au moins un robot est disposé pour un mouvement linéaire.
